**Europäisches Patentamt**

**European Patent Office**

**Office européen des brevets**

(19)

(11) Veröffentlichungsnummer: **0 124 736**
. **B1**

(12) ## EUROPÄISCHE PATENTSCHRIFT

(45) Veröffentlichungstag der Patentschrift: **27.06.90**

(21) Anmeldenummer: **84103205.5**

(22) Anmeldetag: **23.03.84**

(51) Int. Cl.⁵: **C 04 B 33/34**, B 01 J 20/18

(54) Silikatgebundene Zeolithgranulate, Verfahren zu ihrer Herstellung und Verwendung.

(30) Priorität: **11.04.83 DE 3312876**

(43) Veröffentlichungstag der Anmeldung:
**14.11.84 Patentblatt 84/46**

(45) Bekanntmachung des Hinweises auf die
Patenterteilung:
**27.06.90 Patentblatt 90/26**

(84) Benannte Vertragsstaaten:
**AT BE CH DE FR GB LI LU NL**

(56) Entgegenhaltungen:
EP-A-0 072 396
DE-A-2 656 633
DE-B-1 211 134
DE-B-1 792 743

(73) Patentinhaber: **Degussa Aktiengesellschaft**
**Weissfrauenstrasse 9**
**D-6000 Frankfurt am Main 1 (DE)**

(72) Erfinder: **Strack, Hans, Dr.**
**Riemenschneiderstrasse 1**
**D-8755 Alzenau (DE)**
Erfinder: **Kleinschmit, Peter, Dr.**
**Wildaustrasse 19**
**D-6450 Hanau 9 (DE)**

Courier Press, Leamington Spa, England.

**Beschreibung**

Die Erfindung betrifft silikatgebundene Zeolithgranulate, das Verfahren zu ihrer Herstellung sowie Verwendung der Zeolithgranulate als Adsorptionsmittel.

Es ist bekannt, magnesiumsilikatgebundene Zeolithgranulate mit Hilfe von Wasserglas herzustellen, indem man kristallinen Zeolith (NaA) mit einem Alkalisilikat, in dem das Verhältnis $Me_2O:SiO_2$ 1:3 bis 1:5 beträgt, verformt und das verformte Produkt anschliessend bei Temperaturen zwischen 40 und 280°C bis zu einer Restfeuchtigkeit von 0 bis 35 Gewichtsprozent trocknet, anschliessend mit einer 0,5 bis 35 %igen Magnesiumsalzlösung bis zum völligen Ionenaustausch im Zeolith und Umwandlung des Alkalisilikates in Magnesiumsilikat behandelt, die Granulate durch Waschen mit Wasser von anhaftender Salzlösung befreit und schliesslich bei Temperaturen über 200°C aktiviert.

Die so hergestellten magnesiumsilikatgebundenen Zeolithgranulate zeichnen sich dadurch aus, daß die in der Ausgangsmischung enthaltenen Alkalimetalle vollständig in den Granulaten durch Magnesium ersetzt wurden. Die nach dem bekannten Verfahren hergestellten Granulate haben einen scheinbaren Porendurchmesser von 3 Å und nehmen ausser Wasser und Ammoniak keines der technisch verwendeten Gase auf (DE—AS 15 67 588).

Das Dokument EP—A 0 072 396 beschreibt ein Verfahren zur Herstellung von Zeolithgranulaten, bei welchem man pulverförmigen Zeolith A in einem Mischer vorlegt, Alkalisilikatlösung hinzugibt, solange mischt, bis man ein Zeolithgranulat mit einer Korngröße von wenigstens 0,1 mm erhält, dieses Granulat gegebenenfalls nachrollt, das feuchte Zeolithgranulat zunächst bei Temperaturen von 20 bis 39°C trocknet, wobei man den Kohlendioxidgehalt der Trockenluft auf weniger als 200 ppm einstellt, anschließend in einem zweiten Trockenschritt bei Temperaturen von 40—120°C unter sonst gleichen Bedingungen trocknet und anschließend das so erhaltene Granulat bei Temperaturen von höchstens 600°C, beispielsweise in einem Drehrohr, aktiviert.

Die derart hergestellten Zeolithgranulate weisen den Nachteil auf, daß sie nahezu kein Methanol adsorbieren.

Das Dokument DE—B 12 11 134 beschreibt ein Verfahren zur Herstellung von Natriumzeolith A mit veringerter scheinbarer Porengröße, bei welchem man Natriumzeolith A mit Wasserdampf behandelt.

Die Behandlung kann ebenfalls mit silikatgebundenen oder tongebundenen Zeolithen NaA durchgeführt werden.

Aufgabe der Erfindung ist es silikatgebundene Zeolithgranulate, welche neben Wasser und Ammoniak auch andere Moleküle absorbieren können, herzustellen.

Gegenstand der Erfindung sind Silikatgebundene Zeolithgranulate, hergestellt durch vollständigen Austausch der Natriumionen des Bindemittels gegen Metallkationen, wobei der Zeolith ein Kation enthält, welches nicht in dem Bindemittel vorhanden ist und wobei der Zeolith zusätlich auch das Bindemittelkation enthalten kann.

Das Verfahren zur Herstellung der silikatgebundenen Zeolithgranulate, bei dem man pulverförmigen Zeolith in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate gegebenenfalls zunächst bei Temperaturen von 20 bis 39°C trocknet, wobei man den Kohlendioxidgehalt der Trockenluft auf weniger als 200 ppm einstellt, anschliessend gegebenenfalls in einem zweiten Trockenschritt bei Temperaturen von 40 bis 120°C und gegebenenfalls in einer dritten Trockenstufe bei 121°—200°C unter sonst gleichen Bedingungen trocknet und gegebenenfalls anschliessend bei Temperaturen von höchstens 600°C aktiviert, ist dadurch gekennzeichnet, daß man die so erhaltenen Zeolithgranulate mit einer ersten wässrigen Metallsalzlösung behandelt, wäscht, gegebenenfalls anschliessend mit einer zweiten wässrigen Metallsalzlösung behandelt, wäscht, bei 40 bis 200°C, vorzugsweise 100 bis 120°C trocknet, und gegebenenfalls anschliessend bei 300 bis 650°C calciniert.

Als Zeolithpulver kann man Zeolith A und/oder Zeolith X einsetzen. Weiterhin können als Zeolithpulver Zeolith Y, Mordenit und/oder Zeolithe aus der Pentasilgruppe verwendet werden.

Vorzugsweise werden diese Zeolithpulver in ihrer Natriumform eingesetzt.

Als Zeolith A kann ein pulverförmiger Zeolith, der gemäß DE—OS 24 47 021, DE—OS 25 17 218, DE—OS 26 51 419, DE—OS 26 51 420, DE—OS 26 51 436, DE—OS 26 51 437, DE—OS 26 51 445 und/oder DE—OS 26 51 485 hergestellt wurde und die dort aufgeführte Teilchengrößenverteilung aufweist, eingesetzt werden.

Vorzugsweise wird ein Zeolithpulver des Typs A gemäß DE—OS 26 51 485 verwendent.

Der Wassergehalt des Zeolithen kann 0,1—27%, bevorzugt 12 bis 22% betragen.

Die Natriumsilikatlösung besitzt einen Modul $SiO_2:Na_2O$ von 1,0 bis 3,4 und einen Gehalt an $Na_2O$ von 2—20 Gew.-% und an $SiO_2$ von 5—31 Gew.-%.

Als Zeolith X kann man einen handelsüblichen Zeolithen X, wie er beispielsweise in der DE—PS 10 38 016 beschrieben wird, einsetzen. Als Zeolith Y kann man einen Zeolithen Y gemäß DE—PS 10 98 929 einsetzen.

Der Mordenit ist bekannt aus der DE—PS 11 97 855. Als Zeolith aus der Pentasilgruppe kann beispielsweise der Typ ZSM—5 gemäß US—PS 3 702 886 verwendet werden.

Das Gemisch aus Zeolith und Natriumsilikat weist in Abhangigkeit vom Zeolithtyp folgende Zusammensetzung auf:

2

| Zeolith | Na$_2$O | Al$_2$O$_3$ | SiO$_2$ | H$_2$O |
|---------|---------|-------------|---------|--------|
| A | 1,2 ± 0,2 | 1 | 2,4 ± 0,4 | 12 ± 3 |
| X | 1,2 ± 0,2 | 1 | 3,0 ± 0,5 | 25 ± 5 |
| Y | 1,7 ± 0,5 | 1 | 5,0 ± 1,5 | 30 ± 10 |
| Mordenit | 2,0 ± 0,8 | 1 | 13 ± 2 | 40 ± 10 |
| ZSM-5 | 4 ± 2 | 1 | 35 ± 15 | 90 ± 20 |

Als Mischer können handelsübliche Mischer eingesetzt werden, die vorzugsweise eine Aufdüsvorrichtung enthalten, wie Pflugscharmischer, Schneckenmischer, Mischgranulatoren u.ä..

Als Nachrollvorrichtung kann ein bekanntes Aggregat, wie Granulierteller, Dragiertrommel u.ä., verwendet werden. Hierbei wird eine mechanische Verdichtung und Abrundung des Zeolithgranulates sowie eine Verengung der Korngrößenverteilung erzielt.

Die Trocknung der Zeolithgranulate kann in bekannten Vorrichtungen, wie Trockenschränken, Bandtrocknern, Wirbelschichttrockner kontinuierlich oder diskontinuierlich durchgeführt werden. Vorzugsweise wird ein Wirbelschichttrockner eingesetzt, da hierbei gleichzeitig eine Entstaubund der Zeolithgranulate erzielt wird. Die Abluft des Trocknungsschrittes kann im Kreislauf geführt werden, wobei zur Einstellung des Kohlendioxidgehaltes von weniger als 200 ppm die Trocknungsabluft mit der entsprechenden Menger an Frischluft vermischt wird.

Die Trocknung kann ebensogut in einem Inertgasstrom, wie Stickstoff, durchgeführt werden, d.h., die Anwesenheit von Kohlendioxid ist nicht notwendig.

Das Trocknungsgas kann einen Wasserdampfpartialdruck von 0,01 Torr bis 750 Torr, vorzugsweise 0,1 bis 400 Torr aufweisen, wobei der Partialdruck des Wasserdampfes in Trocknungsgas unterhalb des Sättigungsdruckes bei der entsprechenden Trockentemperatur liegen muß. Gegebenenfalls folgt eine Siebung mit bekannten Siebvorrichtungen, wobei die Siebund wahlweise an feuchten oder an getrockneten Zeolithgranulaten durchgeführt werden kann. Im Falle der Feuchtsiebung eine mechanische Zerstörung der Zeolithgranulate vermieden werden, jedoch kann hierbei das Fehlkorn (Über- und Unterkorn) leicht mechanisch zerkleinert und in den Granulationsprozeß rückgeführt werden. Die getrockneten Zeolithgranulate können bei Temperaturen von 300°C bis 500°C, höchstens 600°C in bekannten Apparaten, wie Muffelofen, Drehrohr, Röhrenofen o.ä. kontinuierlich oder diskontinuierlich aktiviert werden.

Die Behandlung der Zeolithgranulate mit einer ersten Metallsalzlösung führt in erster Linie dazu, daß das Kation des Bindemittels ausgetauscht wird.

Die Behandlung der Zeolithgranulate mit der ersten Metallsalzlösung kann in bekannten Vorrichtungen, wie z.B. Austauschersäulen, durchgeführt werden. Die Behandlungstemperatur kann 5 bis 100°C, vorzugsweise 40 bis 90°C betragen. Die Konzentration der Metallsalzlösungen kann 0,01 bis 10 molar, vorzugsweise 0,1 bis 3 molar betragen.

Die Austauschzeit kann 1 Min. bis 6 h, vorzugsweise 30 Min. bis 3 h. betragen.

Wesentlich ist dabei, daß die Natriumionen des Bindemittels vollständig gegen Metallsalzionen ausgetauscht werden. Ein vollständiger Austausch der Natriumionen in dem Zeolithen wird dadurch verhindert, daß man die ausgetauschten Natriumionen in der Magnesiumsalzlösung beläßt. Hierzu kann die Metallsalzlösung vorzugsweise während der Behandlung umgepumpt werden.

Der Austausch des Zeolithkations erfolgt neben dem vollständigen Austausch des Bindemittelkations nur dann, wenn das Metallsalzkation in den Zeolithen einzudringen vermag. Der vollständige Austausch des Zeolithkations wird vermieden, indem man bei den Behandlungsschritten mit wässrigen Metallsalzlösung beispielsweise auf eine Zwischenkalzinierung verzichtet, oder die Behandlung mit Metallsalzlösungen abbricht, bevor das auszutauschende Kation vollständig aus den Gitter entfernt ist.

Als erste Metallsalzlösungen können eingesetzt werden: Magnesiumsalzlösungen, wie z.B. Magnesiumchlorid, Magnesiumsulfat, Calciumsalzlösungen, wie z.B. Calciumchlorid, Calciumnitrat, Bariumsalzlösungen, wie z.B. Bariumchlorid, Aluminiumsalzlösungen, wie z.B. Aluminiumchlorid, Aluminiumsulfat, Salzlösungen von Seltenen Erden, wie z.B. Seltenerdchloride.

Als zweite Metallsalzlösung können solche Lösungen eingesetzt werden, deren Kationen in das Zeolithgitter einzudringen vermögen. In dieser zweiten Behandlungsstufe werden ausschließlich die Kationen im Zeolithgitter ausgetauscht.

Diese Metallsalzlösungen können sein: lösliche Salze, z.B. Chloride, Sulfate, Nitrate beispielsweise folgender Metalle sein: Silber, Magneiusm, Calcium, Barium, Kobalt, Nickel, Zink und andere. Geeignet sind solche Kationen, die in das Gitter des Zeolithen einzudringen vermögen.

Der Austausch mit der zweiten Metallsalzlösung kann unter denselben Bedingungen und derselben Apparatur durchgeführt werden, wie der Austausch mit der ersten Metallsalzlösung.

Die erfindungsgemäßen Zeolithgranulate weisen dann nach Abschluß der Behandlung mit wässrigen Metallsalzlösungen einen Gehalt an Natriumionen auf. Dieser Natriumionengehalt ist auf die Zeolithkomponente des Zeolithgranulates beschränkt, während das Bindemittel frei von Natriumionen ist.

Auf Grund des erfindungsgemäßen Herstellverfahrens ist das silikatische Bindemittel kein Zeolith, D.h., neben dem eingesetzten Zeolithen liegt das Silikatbindemittel in reiner Form vor.

Die erfindungsgemäßen Zeolithgranulate können vorteilhafterweise als Adsorptionsmittel eingesetzt werden.

Sie können u.a. die folgenden Moleküle absorbieren: $H_2O$, $NH_3$, $CH_3—OH$, $CO_2$ und n-Hexan.

## Beispiel 1
(Herstellung der Ausgangszeolithgranulate auf Basis Zeolith A)

In einem Schneckenmischer werden 100 kg Zeolith A (hergestellt gemäß der DE—OS 26 51 485, 21% Wassergehalt) vorgelegt. Hierzu werden 49 kg Natriumsilikatlösung (Modul 3,38, $Na_2O$ = 4,8 Gew.-%, $SiO_2$ = 15,7 Gew.-%) zugedüst. Man erhält Zeolithgranulate mit einer Korngröße von 0,1 bis 3 mm, das anschliessend in einem Granulierteller nachgerollt wird. Man erhält so ein engeres Kornspektrum (0,3—2,5 mm). Die Zeolithgranulate werden im feuchten Zustand in Kornfraktionen < mm, 1—2 mm und > 2 mm gesiebt.

Die Kornfraktion von 1—2 mm (Ausgangsverbindung 1A) wird in einem Fließbetttrockner in einer ersten Stufe bei 35°C getrocknet. Hierbei wird ein Teil der Abluft im Kreis geführt, sodaß der $CO_2$-Gehalt der Luft 150 ppm beträgt. Der Wasserdampfpartialdruck beträgt 21 mm Hg. Dieses Zeolithgranulat (Ausgangsverbindung 1B) wird in einem Drehrohr bei 420°C aktiviert. (Ausgangsverbindung 1C).

Das Produkt 1C hat folgende Eigenschaften:

| | |
|---|---|
| Korngröße | 1—2 mm |
| Aussehen | rund, weiß, staubfrei |
| Bruchfestigkeit | mind. 2 kg (1 mm Perle) |
| Adsorptionsdaten | (p/po = 0,8 20°C Sättigungsbeladung) |
| $H_2O$ | 23.4% |
| $NH_3$ | 12,0% |
| $CO_2$, $O_2$, $N_2$, Ar | 0,1% |
| Methanol, Ethanol | 0,2% |

## Beispiel 2
(Herstellung der Ausgangszeolithgranulate auf Basis Zeolith X)

In einem Schneckenmischer werden 75 kg Zeolith X (DE—PS 10 38 017, $SiO_2$:$Al_2O_3$ =25, 21% Wassergehalt) vorgelegt und mit 83,5 kg Natriumsilikatlösung ($Na_2O$ = 3,3%, $SiO_2$ = 10,7%) vermischt. Man erhält ein Zeolithgranulat mit einer Korngröße von 0,1—3 mm, das ausschließlich in einem Granulierteller nachgerollt wurde. Dieses Produkt wurde bei 34°C in einem Wirbelschichttrockner getrocknet, wobei durch Kreislaufführung der Luft der $CO_2$-Gehalt auf 150 ppm eingestellt wurde. Der Wasserdampfpartialdruck betrug 18 Torr. Das getrocknete Zeolithgranulat wurde bei 400°C in einem Drehrohr aktiviert.

## Beispiel 3
(Herstellung der Ausgangszeolithgranulate auf Basis Zeolith Y)

In einem Schneckenmischer werden 75 kg Zeolith Y (hergestellt gemäß DE—PS 10 98 929, $SiO_2$/$Al_2O_3$ = 4,6 18% Wassergehalt) mit 90,5 kg Natriumsilikatlösung ($Na_2O$ = 3,3%, $SiO_2$ = 10,7%) vermischt. Die weitere Bearbeitung erfolgt wie in Beispiel 2 beschrieben.

## Beispiel 4
(Herstellung der Ausgangszeolithgranulate auf Basis Mordenit)

In einem Pflugscharmischer werden 2,17 kg Mordenit (Handelsprodukt, Firma Norton, Na-Form 8% Wassergehalt) mit 2,0 kg Ntriumsilikatlösung (3,3% $Na_2O$, 10,7% $SiO_2$) bis sich Zeolithgranulate von 0,5—5 mm gebildet haben, vermischt. Die ausgesiebte Fraktion von 1—2 mm wird in einer Dragiertrommel nachgerollt, in einem Umlufttrockenschrank zunächst bei Umgebungstemperatur, dann bei 110°C getrocknet und in einem Muffelofen bei 450°C aktiviert.

## Beispiel 5
(Herstellung der Ausgangszeolithgranulate auf Basis Pentasil)

In einem Pflugscharmischer werden 2 kg Pentasil, hergestellt gemäß US—PS 3 702 886 $SiO_2$:$Al_2O_3$ =

35,1% Wassergehalt mit 2,0 kg Natriumsilikatlösung (3,3% $Na_2O$, 10,7% $SiO_2$) bis sich Zeolithgranulate mit einem Durchmesser von 0,5 bis 5 mm gebildet haben, vermischt. Die ausgesiebte Fraktion von 1 bis 2 mm wird in einer Dragiertrommel nachgerollt, in einem Umlufttrockner zunächst bei Umgebungstemperatur, anschliessend bei 110°C getrocknet und in einem Muffelofen bei 450°C aktiviert.

Die Herstellung der erfindungsgemäßen Zeolithgranulate, ausgehend von den Ausgangszeolithgranulaten gemäß Beispiel 1—5, wird nachfolgend beschrieben.

Beispiele 6—12, 14, 15, 17—20

In einer Austauschersäule (1 = 1m, d = 0,2 m) wird eine bestimmte Menge an Ausgangszeolithgranulat gemäß Beispiele 1A, 1B, 1C oder 2, in der ersten Stufe mit einer Metallsalzlösung behandelt und anschließend gewaschen, bis die Leitfähigkeit im Waschwasser < 500 µS beträgt. Gegebenenfalls wird das Zeolithgranulat anschließend mit einer zweiten Metallsalzlösung behandelt und unter den gleichen Bedingungen gewaschen. Das Produkt wird dann bei 110°C im Trockenschrank getrocknet und bei 450°C im Muffelofen aktiviert.

Beispiele 13, 16, 21—24

In einem 21-Becherglas wurden Ausgangszeolithgranulate gemäß den Beispielen 1C, 3, 4, 5 mit einer Metallsalzlösung behandelt, gewaschen, bis die Leitfähigkeit des Waschwassers < 500 µS beträgt, bei 110°C im Trockenschrank und bei 450°C im Muffelofen aktiviert.

Die einzelnen Bedingungen der Durchführung sind in der Tabelle 1 aufgeführt.

Tabelle 1

| Bsp. | Ausgangsverb. Zeolith-Typ kg | 1. Austauschlösung | | | | | 2. Austauschlösung | | | | |
|---|---|---|---|---|---|---|---|---|---|---|---|
| | | Art | Menge (1) | Konz. (mol/1) | Zeit (h) | Temp (°C) | Art | Menge (1) | Konz. (mol/1) | Zeit (h) | Temp. (°C) |
| 6 | 18,5 A (1A) | $MgCl_2$ | 20 | 0,25 | {3 2 | {RT 60 | | | | | |
| 7 | 15 A (1B) | $MgCl_2$ | 20 | 0,25 | 3 | 60 | | | | | |
| 8 | 12 A (1C) | $MgCl_2$ | 20 | 0,25 | 3 | 80 | | | | | |
| 9 | 12 A (1C) | $MgCl_2$ | 20 | 0,25 | 3 | 80 | KCl | 20 | 1 | 2 | 60 |
| 10 | 10 A (1C) | $MgCl_2$ | 20 | 0,25 | 3 | 80 | NaCl | 20 | 1 | 2 | 60 |
| 11 | 12 A (1C) | $MgCl_2$ | 20 | 0,25 | 3 | 80 | $CaCl_2$ | 20 | 1 | 2 | 60 |
| 12 | 12 A (1C) | $CaCl_2$ | 20 | 1,3 | 3 | 60 | | | | | |
| 13 | 0,15 A (1C) | $BaCl_2$ | 0,5 | 0,5 | 1 | 60 | | | | | |
| 14 | 12 A (1C) | $Al_2(SO_4)_3$ | 20 | 0,12 | 1 | 60 | | | | | |
| 15 | 12 A (1C) | $Al_2(SO_4)_3$ | 20 | 0,12 | 1 | 60 | KCl | 20 | 0,6 | 2 | 60 |
| 16 | 0,1 A (1C) | $SECl_3$ | 0,5 | 0,5 | 2 | 60 | | | | | |
| 17 | 12 X (2) | $MgCl_2$ | 20 | 0,25 | 3 | 60 | | | | | |
| 18 | 12 X (2) | $CaCl_2$ | 20 | 1,0 | 3 | 60 | | | | | |
| 19 | 12 X (2) | $Al_2(SO_4)_3$ | 20 | 0,12 | 1 | 60 | | | | | |
| 20 | 12 X (2) | $Al_2(SO_4)_3$ | 20 | 0,12 | 1 | 60 | KCl | 20 | 0,6 | 2 | 60 |
| 21 | 0,1 X (2) | $SECl_3$ | 0,5 | 0,5 | 2 | 60 | | | | | |
| 22 | 0,5 Y (3) | $MgCl_2$ | 1,5 | 0,25 | 2 | 60 | | | | | |
| 23 | 0,5 Mord.(4) | $MgCl_2$ | 1,5 | 0,25 | 2 | 60 | | | | | |
| 24 | 0,5 ZSM5 (5) | $MgCl_2$ | 1,5 | 0,25 | 2 | 60 | | | | | |

EP 0 124 736 B1

EP 0 124 736 B1

Die Zusammensetzung und gegebenenfalls die Adsorptionsdaten der Ausgangsverbindungen 1C—5 und der erfindungsgemäßen Zeolitgranulate 6—24 sin in Tabelle 2 dargestellt:

Tabelle 2

| Bsp. | Zeolith- | Kationen | Bindemittel | Adsorptionsdaten | | | | | | Kinetik-Index für Wasser |
|------|----------|----------|-------------|------|------|------|------|------|------|------|
| | | | | $H_2O$ 30' | $H_2O$ 600' | $NH_3$ | $CH_3OH$ | nHexan | $CO_2$ | |
| 1C | A | Na | Na-Silikat | 16,2 | 23,4 | 7,5 | 1,1 | 0,3 | 2,0 | 0,69 |
| 2 | X | Na | Na-Silikat | | | | | | | |
| 3 | Y | Na | Na-Silikat | | | | | | | |
| 4 | Mordenit | Na | Na-Silikat | n.b. | | | | | | |
| 5 | ZSM 5 | Na | Na-Silikat | | | | | | | |
| 6 | A | Na,Mg | Mg-Silikat | 25,9 | 26,4 | 14,4 | 18,4 | 4,1 | 13,9 | 0,98 |
| 7 | A | Na,Mg | Mg-Silikat | 25,7 | 26,9 | 14,3 | 20,2 | 3,6 | 14,5 | 0,96 |
| 8 | A | Na,Mg | Mg-Silikat | 23,7 | 25,1 | 11,7 | 15,7 | 2,7 | 8,4 | 0,94 |
| 9 | A | Na,K | Mg-Silikat | 17,5 | 22,2 | 7,7 | 15,4 | 2,1 | 1,2 | 0,79 |
| 10 | A | Na | Mg-Silikat | 24,4 | 24,8 | 13,2 | 17,9 | 3,3 | 13,8 | 0,98 |
| 11 | A | Na,Ca | Mg-Silikat | 22,0 | 23,4 | 12,2 | 18,9 | 13,5 | 16,4 | 0,94 |
| 12 | A | Na,Ca | Ca-Silikat | 21,1 | 21,5 | 11,9 | 17,5 | 13,7 | 17,5 | 0,98 |
| 13 | A | Na,Ba | Ba-Silikat | 12,5 | 15,0 | | 0,7 | 0,3 | | 0,83 |
| 14 | A | Na | Al-Silikat | 21,5 | 23,2 | 9,5 | 4,2 | 4,3 | 4,3 | 0,93 |
| 15 | A | Na,K | Al-Silikat | 18,5 | 22,8 | | 1,4 | 1,4 | 1,0 | 0,81 |
| 16 | A | Na | SE-Silikat | 15,3 | 17,6 | 8,0 | 3,3 | 0,9 | 3,3 | 0,87 |
| 17 | X | Na,Mg | Mg-Silikat | 27,3 | 29,4 | | 21,3 | 17,8 | 17,2 | 0,93 |
| 18 | X | Na,Ca | Ca-Silikat | 23,4 | 23,7 | 14,2 | 18,1 | 12,0 | 15,5 | 0,99 |
| 19 | X | Na,Al | Al-Silikat | 25,8 | 26,3 | 13,4 | 16,6 | 12,7 | 16,4 | 0,96 |
| 20 | X | Na,K | Al-Silikat | 22,6 | 22,9 | | 15,0 | 12,9 | 10,7 | 0,99 |
| 21 | X | Na,SE | SE-Silikat | 23,9 | 24,3 | 13,2 | 17,4 | 12,9 | 16,9 | 0,98 |
| 22 | Y | Na,Mg | Mg-Silikat | n.b. | | | | | | |
| 23 | Mordenit | Na,Mg | Mg-Silikat | | | | | | | |
| 24 | ZSM 5 | Na,Mg | Mg-Silikat | | | | | | | |

# EP 0 124 736 B1

**Patentansprüche**

1. Silikatgebundene Zeolithgranulate, hergestellt durch vollständigen Austausch der Natriumionen des Bindemittels gegen Metallkationen, wobei der Zeolith ein Kation enthält, welches nicht in dem Bindemittel vorhanden ist, und wobei der Zeolith zusätzlich auch das Bindemittelkation enthält.

2. Verfahren zur Herstellung der silikatgebundenen Zeolithgranulate gemäß Anspruch 1, wobei man pulverförmigen Zeolith in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate gegebenenfalls zunächst bei Temperaturen von 20 bis 39°C trocknet, woebei man den Kohlendioxidgehalt der Trockenluft auf weniger als 200 ppm einstellt, anschließend gegebenenfalls in einem zweiten Trockenschritt bei Temperaturen von 40—120°C und gegebenenfalls in einer dritten Trockenstufe bei 121—200°C unter sonst gleichen Bedingungen trocknet und gegebenenfalls anschließend bei Temperaturen von höchstens 600°C aktiviert, dadurch gekennzeichnet, daß man die so erhaltenen Zeolithgranulate mit einer ersten wäßrigen Metallsalzlösung behandelt, wäscht, gegebenenfalls anschließend mit einer zweiten wäßrigen Metallsalzlösung behandelt, wäscht, bei 40 bis 200°C, vorzugsweise 100 bis 120°C trocknet und gegebenenfalls anschließend bei 300 bis 650°C calciniert.

3. Verwendung der silikatgebundenen Zeolithgranulate nach Anspruch 1 als Adsorptionsmittel.

**Revendications**

1. Granulés de zéolithe, liés par des silicates, préparés par échange complet des ions sodium du liant contre des cations métalliqués, la zéolithe contenant un cation qui n'est pas présent dans le liant et pouvant, en outre, contenir également le cation du liant.

2. Procédé de préparation de granulés de zéolithe liés par des silicates selon la revendication 1, par lequel on place de la zéolithe en poudre dans un mélangeur, on ajoute une solution de silicate de sodium, on mélange jusqu'à ce qu'on obtienne des granulés de zéolithe ayant une taille de grain d'au moins 0,1 mm, on pastille, le cas échéant, ces granulés de zéolithe, on sèche, les cas échéant, ces granulés humides, d'abord à des températures comprises entre 20 et 39°C, en réglant la teneur en dioxyde de carbone de l'air de séchage à moins de 200 ppm, puis, le cas échéant, dans une deuxième étape de séchage, on le sèche à des températures comprises entre 40 et 120°C et, le cas échéant, dans une troisième étape de séchage, on le sèche entre 121° et 200°C, dans des conditions par ailleurs identiques et ensuite, le cas échéant, on effectue une activation à des températures de 600°C au plus, procédé caractérisé en ce qu'on traite les granulés de zéolithe ainsi obtenus avec une première solution aqueuse de sel métallique, on les lave, et ensuite on les traite, le cas échéant, avec une deuxième solution aqueuse de sel métallique, on les sèche entre 40 et 200°C, de préférence 100 à 120°C et, le cas échéant, on les calcine entre 300 et 650°C.

3. Utilisation comme adsorbants des granulés de zéolithe liés par des silicates selon la revendication 1.

**Claims**

1. Silicate-bound zeolitic granular materials, produced by complete exchange of the sodium ions of the binder with metal cations, in which the zeolite contains a cation which is not present in the binder and in which the zeolite in addition also contains the binder cation.

2. Process for the production of the silicate-bound zeolitic granular materials according to Claim 1, in which zeolite powder is charged to a mixer, sodium silicate solution is added, mixing is carried out until zeolitic granular materials with a particle size of at least 0,1 mm are obtained, these zeolitic granular materials are optionally after-rolled, the moist zeolitic granular materials are optionally first dried at temperatures of 20 to 39°C while the carbon dioxide content of the drying air is adjusted to less than 200 ppm, afterwards optionally dried in a second drying stage at temperatures of 40—120°C and optionally dried in a third drying stage at 121—200°C under otherwise the same conditions and optionally subsequently activated at temperatures of a maximum of 600°C, characterized in that the zeolitic granular materials so obtained are treated with a first aqueous metal salt solution, washed, optionally subsequently treated with a second metal salt solution, washed, dried at 40 to 200°C, preferably 100 to 120°C, and optionally subsequently calcined at 300 to 650°C.

3. Use of the silicate-bound zeolitic granular materials according to Claim 1 as adsorbents.